# EUROPEAN PATENT APPLICATION

(11) **EP 2 555 418 A1**
(43) Date of publication of application: **06.02.2013**
(21) Application number: 11762720.8
(22) Date of filing: 25.03.2011
(51) Int. Cl.: H02P 6/18, E02F 9/20

(54) **CONSTRUCTION MACHINE**

(30) Priority: 29.03.2010 JP 2010075217
(71) Applicant: Hitachi Construction Machinery Co., Ltd., Bunkyo-ku, Tokyo 112-8563 (JP)
(72) Inventor: WATANABE Toshihiko, Tsuchiura-shi Ibaraki 300-0013 (JP); ISHIDA Toshihiko, Tsuchiura-shi Ibaraki 300-0013 (JP); EDAMURA Manabu, Tsuchiura-shi Ibaraki 300-0013 (JP)
(74) Representative: Beetz & Partner
(86) International application number: PCT/JP2011/057431
(87) International publication number: WO 2011/122489

(57) **Abstract**

In a construction machine including a prime mover 22, a hydraulic pump 41 driven by the prime mover 22, a hydraulic motor 27 driven by hydraulic fluid from the hydraulic pump 41, an electric motor 25, a storage device 24 for delivering and receiving electric power to and from the electric motor 25, a controller 60 for electric motor control, the controller exercising drive control on the electric motor 25, and a speed reduction mechanism 26 for transmitting drive forces of the electric motor 25 and hydraulic motor 27 to a swing structure, wherein the controller 60 for electric motor control includes inductive voltage waveform detecting means for detecting an inductive voltage waveform of the electric motor 25, and magnetic pole position computing means for, in the state where the swing structure 2 is driven only by torque of the hydraulic motor 27, taking in the inductive voltage waveform from the inductive voltage detecting means and computing a magnetic pole position of a rotor of the electric motor 25 on the basis of the inductive voltage waveform obtained not via a rotation position sensor.

## Description

### Technical Field

The present invention relates generally to construction machines provided with a swing structure, such as a hydraulic excavator. More specifically, the invention relates to a construction machine provided with a swing structure driven by a swing structure drive unit using both a hydraulic motor and an electric motor.

### Background Art

In general, a construction machine such as a hydraulic excavator uses, as a power source, an engine using fuel such as gasoline, light oil or the like to drive a hydraulic pump to produce hydraulic fluid. This hydraulic fluid drives hydraulic actuators such as hydraulic motors and hydraulic cylinders. The hydraulic actuator allows for significant power production although it is small in size and light in weight; therefore, it is widely used as an actuator for a construction machine.

By contrast, in recent years, construction machines have been proposed that use electric actuators composed of an electric motor, a storage device (a battery, an electric double layer capacitor or the like), and the like. Such construction machines intend to more increase energy efficiency and to more save energy than conventional construction machines that use only hydraulic actuators (See e.g. patent document 1). The electric actuator has better energy efficiency than that of the hydraulic actuator, that is, it has superior characteristics in terms of energy, in which kinetic energy during braking can be regenerated as electric energy.

For example, the conventional technology, which is described in patent document 1, discloses a hydraulic excavator on which an electric motor is mounted as a drive actuator for a swing structure. Actuators that swingably drive the swing structure of a hydraulic excavator with respect to a track structure are used very often and repeat frequent start-stop and acceleration-deceleration during work.

In this case, the hydraulic actuator discards as heat the kinetic energy of the swing structure in a hydraulic circuit during deceleration (during braking). However, the electric actuator will be capable of regenerating the kinetic energy during deceleration as electric energy. Therefore, it is believed that the use of the electric motor is effective from the view point of energy saving.

A disclosed construction machine is equipped with a hydraulic motor and an electric motor to drive a swing structure by use of the total torque (see e.g. patent documents 2 and 3). The conventional technologies disclosed in patent documents 2 and 3 use both the electric motor and a hydraulic motor as swing drive actuators. This intends to achieve that the construction machine will comfortably be operated by even an operator who is familiar with the conventional hydraulic actuator-driven construction machine. In addition, energy saving is achieved with a configuration that is simple and easy to put into practical use.

### Prior Art Documents

### Patent Documents

Patent document 1: JP,A 2001-016704
Patent document 2: JP,A 2004-124381
Patent document 3: JP,A 2009-052339
Patent document 4: JP,A 09-056193

### Summary of the Invention

### Problem to be Solved by the Invention

When the electric motor is used for the drive unit of the swing structure of the construction machine as in the conventional technologies disclosed in patent documents 1 to 3, the electric motor repeats stop and start operations during work. For such an application, a permanent magnetic synchronous motor with a magnetic pole position sensor, i.e., a servo motor is generally used. Starting the servo motor from a stopped state needs to detect the magnetic pole position of a rotor with respect to a stator. Therefore, a magnetic pole position sensor such as a resolver and an encoder needs to be installed as disclosed in the conventional technology of patent document 3.

The construction machine is subject to strict conditions, such as, particularly, vibration, impact and heat. Therefore, when a magnetic pole position sensor is used for the electric motor of a swing drive unit, there is a problem with lowered reliability. In addition, the magnetic pole position sensor is expensive; therefore, there is also a problem with increased manufacturing costs.

To eliminate such problems, it is conceivable to introduce a sensor-less motor drive control technology that is commonly used for a motor which is used to continue air conditioner running or the like. In this technology, a permanent magnet synchronous motor is driven without a magnetic pole position sensor. However, if such a sensor-less motor drive control technology is applied to the drive unit of the swing body of the construction machine, a problem arises in start-up from a stopped state.

Starting up a motor in the sensor-less motor drive control needs the following sequence. For example, two-phase coils among three-phase coils are energized and inductive voltage occurring in the remaining one-phase coil of a stator winding is detected, the magnetic pole position of the rotor is detected based on the inductive voltage, and the energization of the two-phase coils sequentially switched (See e.g. patent document 4). Therefore, it is difficult to apply the sensor-less drive control technology to the swing structure drive unit of the construction machine that requires the repetition of stop and start and swinging movement at very slow speed.

The present invention has been made to solve such a problem and aims to provide a construction machine that is equipped with both a hydraulic motor and an electric motor to drive a swing structure by the total torque thereof, wherein a swing structure drive unit capable of swing-drive from a stopped state is provided while suppressing costs and concurrently improving reliability.

### Means for Solving the Problem

In order to achieve the above object, the invention is, in a first aspect, a construction machine including: a prime mover; a hydraulic pump driven by the prime mover; a hydraulic motor driven by hydraulic fluid from the hydraulic pump; an electric motor; a storage device for delivering and receiving electric power to and from the electric motor; a controller for electric motor control, the controller exercising drive control on the electric motor; and a speed reduction mechanism for transmitting drive forces of the electric motor and hydraulic motor to a swing structure; wherein the controller for electric motor control includes inductive voltage waveform detecting means for detecting an inductive voltage waveform of the electric motor; and magnetic pole position computing means for, in a state where the swing structure is driven only by torque of the hydraulic motor, taking in the inductive voltage waveform from the inductive voltage waveform detecting means and computing a magnetic pole position of a rotor of the electric motor on the basis of the inductive voltage waveform obtained not via a rotation position sensor.

A second aspect of the invention is the construction machine of the first aspect, wherein when a magnetic pole position of a rotor with respect to a stator in the electric motor is unclear because of low swing speed of the swing structure, an swing control lever for swing-controlling the swing structure is operated to output a swing drive command to a control valve adapted to supply hydraulic fluid from the hydraulic pump to the hydraulic motor to drive the swing structure.

A third aspect of the invention is the construction machine of the second aspect, wherein the controller for electric motor control further includes sensor-less drive control means for, when the electric motor reaches a rotation speed that can be used for computing a magnetic pole position of the rotor, computing an inductive voltage waveform of the rotor, and controlling drive of the electric motor.

A fourth aspect of the invention is the construction machine of the third aspect, wherein the sensor-less drive control means starts to apply torque to the electric motor when the electric motor is increased in speed to reach a set value.

A fifth aspect of the invention is the construction machine of the third aspect, wherein the sensor-less drive control means stops application of torque to the electric motor when the electric motor is reduced in speed to reach a set value.

### Effect of the Invention

According to the present invention, the construction machine can be realized with high reliability at low cost that is equipped with both the hydraulic motor and the electric motor for driving the swing structure by use of the total torque thereof, wherein a rotation position sensor for detecting the magnetic pole position of the rotor of the electric motor is not provided and the swing structure drive unit using both of the hydraulic motor and the electric motor is provided. Using both of the hydraulic motor and the electric motor is performed such that in the state where the swing structure is driven only by the torque of the hydraulic motor, the controller for electric motor control takes in the inductive voltage generated in the electric motor, computes the magnetic pole position of the rotor on the basis of the waveform of the inductive voltage obtained, and sensor-less drives the electric motor. Thus, the construction machine can be operated comfortably by an operator who is familiar with the conventional hydraulic actuator-driven construction machine. In addition, energy saving can be achieved by the energy efficiency improving effect and the energy regeneration effect by the electric motor.

### Brief Description of Drawings

[Fig. 1]

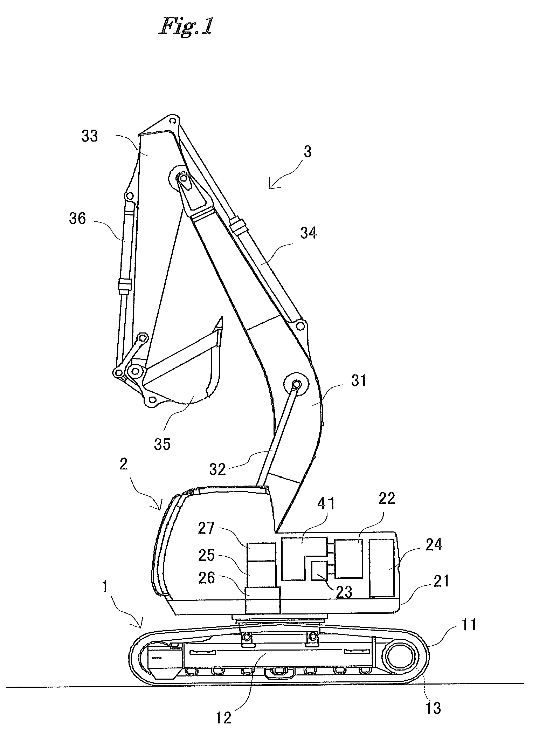

   Fig. 1 is a lateral view illustrating an embodiment of a construction machine according to the present invention.
[Fig. 2]

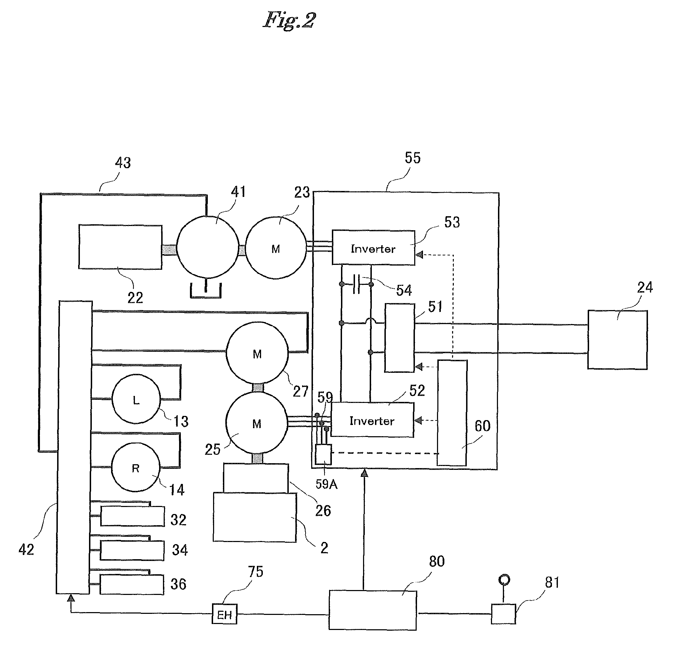

   Fig. 2 is a system configuration diagram of main electric-hydraulic devices constituting the embodiment of the construction machine of the present invention.
[Fig. 3]

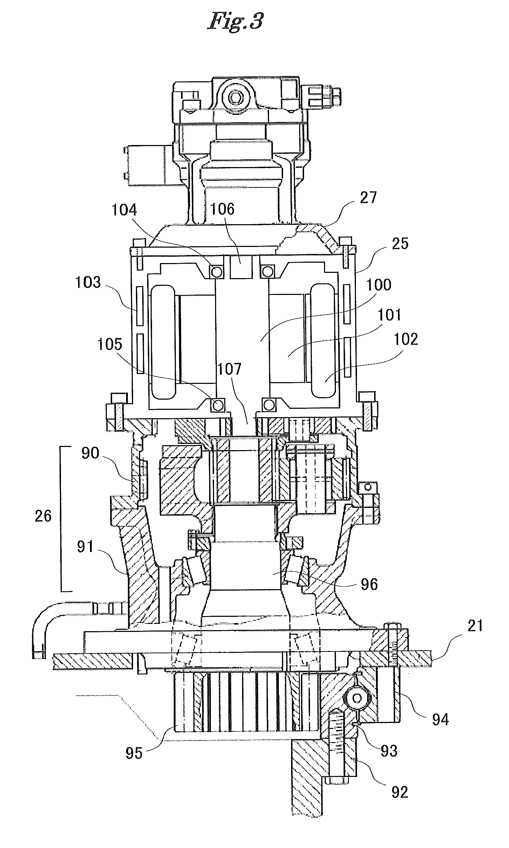

   Fig. 3 is a partial cross-sectional lateral view illustrating an example of a hydraulic-electric swing structure drive unit constituting the embodiment of the construction machine of the present invention.
[Fig. 4]

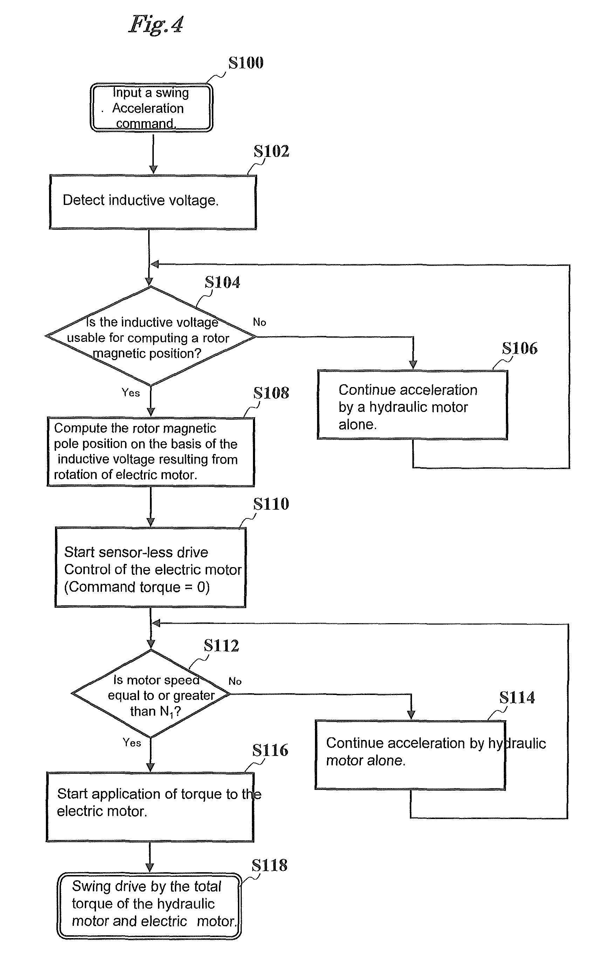

   Fig. 4 is a flowchart illustrating sensor-less drive control, during acceleration, of the hydraulic-electric swing structure drive unit constituting the embodiment of the construction machine of the present invention.
[Fig. 5]

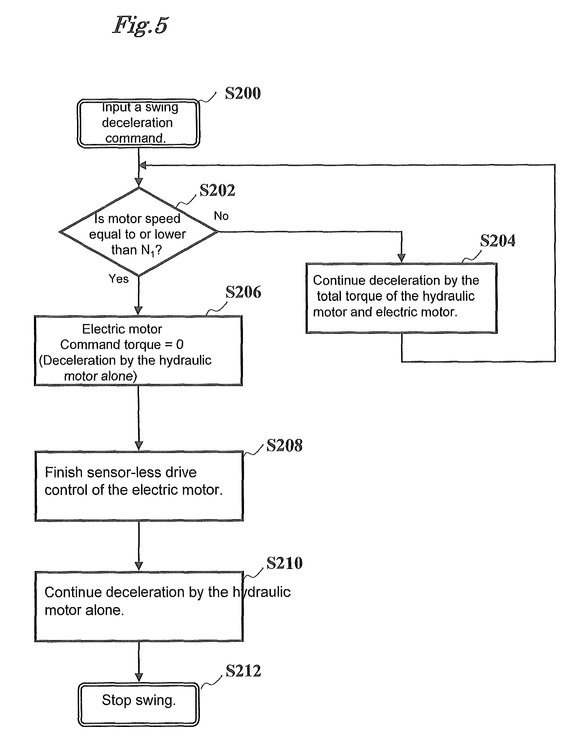

   Fig. 5 is a flowchart illustrating sensor-less drive control, during deceleration, of the hydraulic-electric swing structure drive unit constituting the embodiment of the construction machine of the present invention.
[Fig. 6]

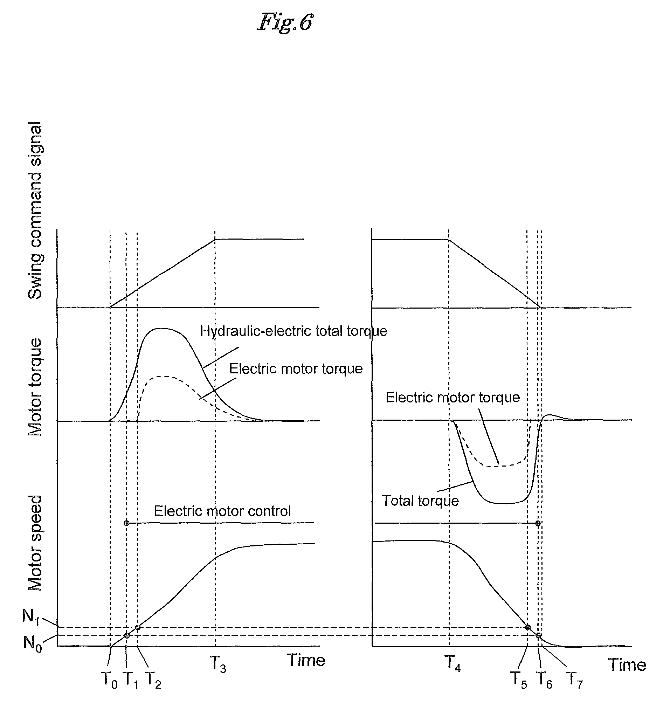

   Fig. 6 is a characteristic view illustrating one example of the relationship between motor speed and motor torque in the sensor-less drive control of the hydraulic-electric swing structure drive unit constituting the embodiment of the construction machine of the present invention.
[Fig. 7]

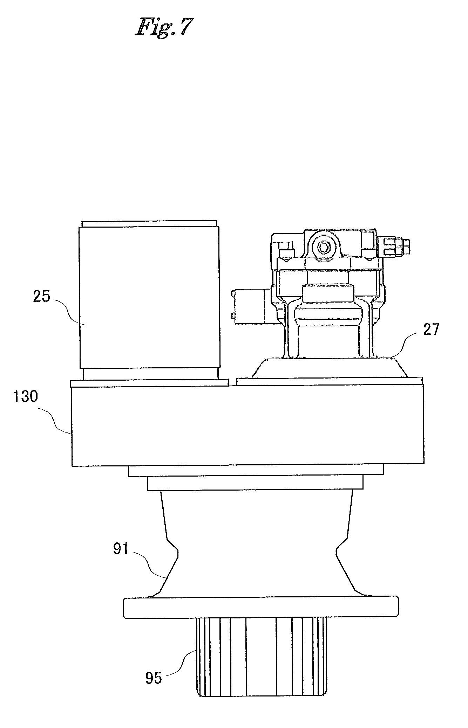

   Fig. 7 is a lateral view illustrating another example of the hydraulic-electric swing structure drive unit constituting the embodiment of the construction machine of the present invention.
[Fig. 8]

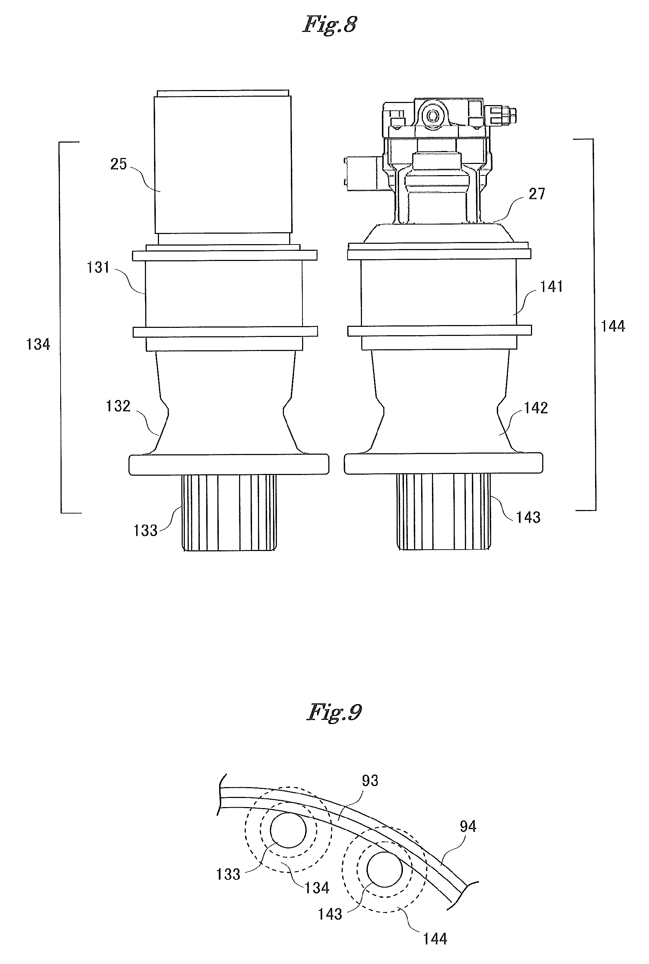

   Fig. 8 is a lateral view illustrating further another example of the hydraulic-electric swing structure drive unit constituting the embodiment of the construction machine of the present invention.
[Fig. 9]
   Fig. 9 is a schematic plan view illustrating an arrangement state of the further another example of the hydraulic-electric swing structure drive unit constituting the embodiment of the construction machine of the present invention.

### Best Mode for Carrying Out the Invention

One embodiment of a construction machine of the present invention will hereinafter be described with reference to the drawings.
Figs. 1 and 2 illustrate the embodiment of the construction machine of the present invention. Fig. 1 is a lateral view illustrating the embodiment of the construction machine of the present invention. Fig. 2 is a system-configuration diagram of main electric-hydraulic devices constituting an embodiment of the construction machine of the present invention.

Fig. 1 illustrates a hydraulic excavator as the construction machine. The hydraulic excavator generally includes a track structure 1 capable of self-traveling; a swing structure 2 swingably mounted on the swing structure 1 and constituting a vehicle body along with the track structure 1; and a front device 3 mounted on a front portion on the swing structure 2 so as to be vertically swingable (to be able to be raised and lowered).

The track structure 1 is composed of a pair of crawlers 11 and crawler frames 12 (only one side is shown in the figure), traveling hydraulic motors 13, 14 (only reference numeral 13 on one side is shown in the figure) independently drive-controlling the corresponding crawlers 11, speed reduction mechanisms therefor and the like.

The swing structure 2 includes a swing frame 21, an engine 22 as a prime mover, an assist power generation motor 23 driven by the engine 22, a swing electric motor 25, a storage device 24 including a capacitor, a battery or the like that stores electric energy and is connected to the assist power generation motor 23 and the swing electric motor 25, and a swing mechanism, which are installed on the swing frame 21. The swing mechanism includes a speed-reduction mechanism 26 which reduces the speed of rotation of the swing electric motor 25 and swingably drive the swing structure 2 (the swing frame 21) with respect to the track structure 1 by use of the drive forces of the swing electric motor 25 and of the swing hydraulic motor 27.

The front device 3 includes a boom 31; a boom cylinder 32 for driving the boom 31; an arm 33 rotatably supported at the vicinity of the leading end of the boom 31; an arm cylinder 34 for driving the arm 33; a bucket 35 rotatably supported at the end of the arm 33; and a bucket cylinder 36 for driving the bucket 35. The front device 3 is mounted on the swing structure 2.

A hydraulic pump 41 and a hydraulic system 40 including a control valve 42 not shown in Fig. 1 are mounted on the swing frame 21 of the swing structure 2. The hydraulic pump 41 is used to produce hydraulic pressure for driving hydraulic actuators such as the swing hydraulic motor 27, the boom cylinder 32, the arm cylinder 34 and the bucket cylinder 36 mentioned above. The hydraulic system 40 is used to drive-control the actuators. The hydraulic pump 41 serving as a hydraulic source is driven by the engine 22.

A main electric-hydraulic system in the embodiment is next described with reference to Fig. 2. In Fig. 2, the drive force of the engine 22 is transmitted to the hydraulic pump 41. The hydraulic operating fluid discharged from the hydraulic pump 41 is supplied to the control valve 42 via a hydraulic pipe 43. In response to commands from control levers not shown, the control valve 42 controls the delivering amount and direction of the hydraulic operating fluid to the boom cylinder 32, the arm cylinder 34, the bucket cylinder 36 and the travelling hydraulic motors 13, 14. In addition, the control valve 42 controls the delivering amount and direction of hydraulic operating fluid to the swing hydraulic motor 27 in response to the command from the control lever.

An electric motor control unit 55 generally includes the storage device 24 including a capacitor, a battery or the like for storing electric energy; a chopper 51 for boosting the DC power from the storage device 24 to a predetermined bus voltage; an inverter 52 for performing power conversion between the chopper 51 and the swing electric motor 25; an inverter 53 performing power conversion between the chopper 51 and the assist power generation motor 23; a smoothing condenser 54 for stabilizing bus voltage; and a controller 60 for electric motor control, the controller controlling the inverters 52, 53 and the like.

When the assist power generation motor 23 and/or the swing electric motor 25 functions as an electric motor, the storage device 24 supplies required electric power via the inverter 52 and/or the inverter 53. When the assist power generation motor 23 and/or the swing electric motor 25 function as generators, the storage device 24 receives electric power generated via the inverter 52 and/or the inverter 53.

The inverters 52, 53 are each composed of a three-phase bridge inverter using a plurality of switching elements such as IGBT or the like and a gate drive circuit for opening and closing the switching elements. For example, at the time of driving the swing electric motor 25, on the basis of a command signal outputted from a controller 80 for swing control described later, the controller 60 for electric motor control outputs a pulse-width modulation (PWM) signal to the inverter 52. This converts the DC power supplied from the storage device 24 into three-phase AC power. The current applied to the stator windings of the three-phase swing electric motor 25 are sequentially commutated. In this way, the current of each phase in response to the command signal is outputted to the swing electric motor 25. The swing electric motor 25 is a permanent magnet synchronous motor using a permanent magnet for a rotor.

A voltage sensor 59A as inductive voltage waveform detecting means is provided on the three-phase cable 59 establishing connection between the swing electric motor 25 and the inverter 52. The inductive voltage waveform generated by the rotation of the swing electric motor 25 is inputted into the controller 60 for electric motor control.

Software serving as magnetic pole position computing means is implemented in the controller 60 for electric motor control. The magnetic pole position computing means computes the revolution speed of the swing electric motor 25 and the magnetic pole position of the rotor on the basis of the induction voltage waveform inputted. For example, when the swing electric motor 25 reaches a predetermined revolution speed from the stop state so that the inductive voltage becomes a sufficient value, the voltage sensor 59A detects an inductive voltage waveform. The controller 60 for electric motor control processes the inductive voltage waveform and thereby to compute the rotor magnetic pole position (the rotation-positional relationship between the stator and the rotor) of the swing electric motor 25. In this way, the sensor-less drive control for the swing electric motor 25 is started.

The rotating shaft of the swing electric motor 25 is coupled to the rotating shaft of the swing hydraulic motor 27. The swing electric motor 25 and the swing hydraulic motor 27 drive the swing structure 2 via the speed reduction mechanism 26.

A controller 80 for swing control uses signals such as a pressure signal, a rotation speed signal and other signals not shown in Fig. 2 and a control command signal from a swing control lever 81 to output command signals to the control valve 42 and the electric motor control unit 55. In this way, the controller 80 for swing control exercises control on switching between a hydraulic-alone swing mode and a hydraulic-electric-combined swing mode, the swing control of each of the modes, monitoring of malfunction of the electric system, energy management, etc. Reference numeral 75 denotes a device that converts an electric signal from the controller 80 for swing control to a hydraulic pilot signal. This device corresponds to e.g. a solenoid proportional valve.

The swing structure drive unit in the present embodiment is next described with reference to Fig. 3. Fig. 3 is a partial cross-sectional view illustrating an example of a hydraulic-electric swing structure drive unit constituting the embodiment of the present invention. Portions denoted with the same reference numerals in Fig. 3 as those in Figs. 1 and 2 are like portions; therefore, their detailed descriptions are omitted.

The swing structure drive unit for the hydraulic excavator according to the embodiment of the present invention illustrated in Fig. 3 is configured such that the swing electric motor 25 is held between the swing hydraulic motor 27 and the gear housing 90 incorporating the speed reduction mechanism 26 composed of a planetary gear. The swing electric motor 25 includes a shaft 100, a rotor 101, a stator coil 102, a cooling water passage 103, an upper bearing 104 and a lower bearing 105. A hydraulic motor shaft end 106 is inserted into and coupled to the upper portion of the shaft 100. An electric motor shaft end 107 located at the lower portion of the shaft 100 is coupled to the planetary gear speed-reduction mechanism in the gear housing 90.

Further, the gear housing 90 is secured to a shaft housing 91 by means of bolts and these are wholly secured the swing frame 21 in the lower portion of the swing structure 2. Incidentally, in Fig. 3, a round barrel 92 is an annular member installed on the upper portion of the track structure 1. An annular inner ring 93 is secured to the upper surface of the round barrel 92 by means of a plurality of bolts. The inner ring 93 is internally provided with an internally-teethed gear meshing with a drive pinion 95. An annular outer ring 94 is secured to a lower surface of the swing frame 21, which is a swing structure 2 side member, and is disposed to surround the outside of the inner ring 93. A pinion shaft 96 connects the drive pinion 95 with the rotating shaft of the swing hydraulic motor.

According to the embodiment of the present invention, the swing electric motor 25 does not have a rotation position sensor for detecting a magnetic pole position; therefore, it is of a simple structure as shown in Fig. 3.

A description is given of the operation of the swing hydraulic motor 27 and the swing electric motor 25 encountered when the swing structure 2 is driven in accordance with the input from the swing control lever 81 by use of Figs. 3 to 6 in the embodiment of the construction machine of the present invention described above. Fig. 4 is a flowchart illustrating sensor-less drive control, during the acceleration, of the hydraulic-electric swing structure drive unit constituting the embodiment of the construction machine of the present invention. Fig. 5 is a flowchart illustrating sensor-less drive control, during the deceleration, of the hydraulic-electric swing structure drive unit constituting the embodiment of the construction machine of the present invention. Fig. 6 is a characteristic diagram illustrating one example of the relationship between motor speed and motor torque in the sensor-less drive control of the hydraulic-electric swing structure drive unit constituting the embodiment of the construction machine of the present invention. Portions denoted with the same reference numerals in Figs. 4 to 6 as those in Figs. 1 to 3 are like portions; therefore, their explanations are not omitted.

In step (S100) during acceleration, a swing acceleration command is first inputted. More specifically, the acceleration operation command signal is inputted from the swing control lever 81 by an operator, for example, in the state where the swing structure 2 is stopped. In Fig. 6, the swing command signal is inputted to increase proportionally from time T₀ to time T₃.

In step (S102), the inductive voltage of the swing electric motor 25 is next detected. More specifically, the rotor 101 of the swing electric motor provided with the permanent magnet is rotated with respect to the stator coil 102 to generate inductive voltage in the stator coil. Thus, the three-phase cable 59 between the swing electric motor 25 and the inverter 52 produces the inductive voltage waveform resulting from the rotation of the swing electric motor 25.

In step (S104), the voltage value of the inductive voltage waveform detected in the previous step (S102) is next measured. Thus, it is determined whether or not the magnet pole position of the swing electric motor 25 can be computed. When the determination is made as NO in this step (S104), control proceeds to step (S106), in which acceleration by the swing hydraulic motor 27 alone is continued. This control is continued until the determination is made as YES in the step (S104).

When the determination is made as YES in step (S104), control shifts to step (S108) in which the rotor magnetic pole position is computed based on the inductive voltage resulting from the rotation of the swing electric motor 25. More specifically, at time T₁ shown in Fig. 6, at which the swing electric motor speed reaches N₀ and the inductive voltage becomes a sufficient value, the inductive voltage waveform is detected by the voltage sensor 59A and the rotor magnetic pole position (the rotation-positional relationship between the stator and the rotor) of the swing electric motor 25 is computed by the controller 60 for electric motor control. Incidentally, it is impossible to get the speed (the revolution speed) of the motor before the controller 60 for electric motor control computes the magnetic pole position. Therefore, N₀ is absolutely a value for explaining the operation.

In step (S110), the sensor-less drive control of the swing electric motor 25 is started. In this case, a "0" signal is inputted as a torque command to the swing electric motor 25.

In step (S112), the speed of the swing electric motor 25 is detected and it is determined whether or not this speed is equal to or greater than a predetermined speed N₁. When the determination is made as NO in step (S112), control proceeds to step (S114) in which the acceleration by the swing hydraulic motor 27 alone is continued. In step (S112), this control is continued until the determination is made as YES.

In step (S112), when the determination is made as YES, control shifts to step (116) in which application of torque to the swing electric motor 25 is started. More specifically, at time T₂ shown in Fig. 6, when the speed of the swing electric motor 25 reaches N₁ which is the drive start reference speed of the swing electric motor, application of torque to the swing electric motor 25 is started. In the next step (S118), the swing structure 2 is driven by the total torque of the swing hydraulic motor 27 and the swing electric motor 25. Incidentally, a dotted line denotes the torque of the swing electric motor 25 and a solid line denotes the total torque of the swing hydraulic motor 27 and the swing electric motor 25. As illustrated in Fig. 7, the reference speed N₁ needs to be greater than the motor speed N₀ necessary to produce the motor inductive voltage which makes it possible to compute the rotor magnetic pole position of the swing electric motor 25. During acceleration, the swing structure is driven by the total torque of the swing hydraulic motor 27 and the swing electric motor 25 at the reference speed N₁ or higher. The reference speed N₁ is, unlike No, a value the controller 60 for electric motor control can get because it is a value after the magnetic pole computation.

In step (S200) during deceleration, a swing deceleration command is next inputted. More specifically, in the rotating state of the swing structure 2, for example, an deceleration operation command signal is inputted from the swing control lever 81 by the operator.

In step (S202), the speed of the swing electric motor 25 is next detected and it is determined whether or not this speed is equal to or greater than the predetermined speed N₁. In step (S202), when the determination is made as NO, control proceeds to step (S204) in which the deceleration by the total torque of the swing hydraulic motor 27 and the swing electric motor 25 is continued. In step (S204), this control is continued until the determination is made as YES. In this case, power generation operation is performed by the swing electric motor 25 so that the kinetic energy of the swing structure 2 is regenerated as electric energy.

In step (S202) when the determination is made as YES, control proceeds to step (S206) in which a "0" signal is inputted as a torque command to the swing electric motor 25 so that the deceleration of the swing hydraulic motor 27 alone is started.

In step (S208), the sensor-less drive control of the swing electric motor 25 is finished and the deceleration by the swing hydraulic motor 27 alone in step (S210) is continued. Finally, the swing of the swing structure 2 is stopped in step (S212). Specifically, at time T₅ shown in Fig. 6, if deceleration to the reference speed N₁ is made, the torque command to the swing electric motor 25 becomes zero, and after the torque of the swing electric motor 25 is equal to zero, the swing structure 2 is stopped by the torque of the swing hydraulic motor 27 alone. If the swing electric motor 25 is about to stop, the speed is equal to or lower than N₀ (at time T₆) and the magnetic pole position is lost, whereby the swing electric motor comes into an uncontrolled state.

The above-described embodiment of the present invention provides the construction machine as below. The construction machine is equipped with both the swing hydraulic motor 27 and the swing electric motor 25 for driving the swing structure 2 by use of the total torque thereof. The construction machine is not provided with a rotation position sensor for detecting the magnetic pole position of the rotor of the swing electric motor 25, and provided with the swing drive unit using both the swing hydraulic motor 27 and the swing electric motor 25. Using both of the hydraulic motor and the electric motor is performed such that in the state where the swing structure 2 is driven only by the torque of the swing hydraulic motor 27, the controller 60 for electric motor control takes in the inductive voltage generated by the swing electric motor 25, computes the magnetic pole position of the rotor on the basis of the waveform of the inductive voltage obtained, and sensor-less drives the swing electric motor 25. In this way, the construction machine can be realized with high reliability at low cost. Thus, the construction machine can be operated comfortably by an operator who is familiar with the conventional hydraulic actuator-driven construction machine. In addition, energy saving can be achieved by the energy efficiency improving effect and the energy regeneration effect by the swing electric motor 25.

A description is given of another example of the hydraulic-electric swing structure drive unit constituting the embodiment of the present invention by use of Fig. 7. Incidentally, portions denoted with the same reference numerals in Fig. 7 as those in Figs. 1 to 6 are like or corresponding portions. Therefore, their explanations are omitted.

In the present embodiment, the shaft of a swing electric motor 25 is coupled to that of a swing hydraulic motor 27 in a gear box 130 and its rotation is led to a pinion shaft. In this case, the revolution speed of the swing electric motor 25 and that of the swing electric motor 27 can be varied by a gear ratio of gears not shown in the gear box. Although the swing structure drive unit as described above is used, the rotation of the swing hydraulic motor 27 rotates the swing electric motor 25. Therefore, the magnetic pole position can be computed based on the inductive voltage produced by the swing electric motor 25 in the state where the swing structure 2 is driven only by the torque of the swing hydraulic motor 27.

The present embodiment can provide the same effect as that of the embodiment described earlier.

In the present embodiment, setting of the gear ratio of the swing structure drive unit can set the revolution speed of the swing electric motor 25 higher than that of the swing hydraulic motor 27. With such setting, even if the revolution speed of the swing structure 2 is relatively low, the detected revolution speed of the swing electric motor 25 is high. Therefore, the magnetic pole position of the swing electric motor 25 can be computed based on the low-speed rotation range of the swing structure 2. Consequently, the sensor-less drivable range of the swing electric motor 25 can be increased, so that the reliability of the construction machine is improved.

A description is next given of further another example of the hydraulic-electric swing structure drive unit constituting the embodiment of the present invention by use of Figs. 8 and 9. Fig. 8 is a lateral view illustrating the hydraulic-electric swing structure drive unit constituting the embodiment of the construction machine of the present invention. Fig. 9 is a schematic plan view illustrating an arrangement state of the further another example of the hydraulic-electric swing structure drive unit constituting the embodiment of the construction machine of the present invention. Incidentally, portions denoted with the same reference numerals in Figs. 8 and 9 as those in Figs. 1 to 7 are like or corresponding portions. Therefore, their explanations are omitted.

In the present embodiment, a hydraulic swing structure drive unit 134 and an electric swing structure drive unit 144 are separately installed on the swing frame 21. A pinion 133 of the swing electric motor 25 is coupled to a pinion 143 of the swing hydraulic motor 27 via the gear of an inner ring 93. After all, the swing structure 2 is driven by the total torque of the swing hydraulic motor 27 and the swing electric motor 25. Therefore, the magnetic pole position of the swing electric motor 25 can be computed based on inductive voltage generated in the swing electric motor 25 in the state where the swing structure 2 is driven only by the torque of the swing hydraulic motor 27.

The present embodiment can provide the same effect as that of the early described embodiment.

Incidentally, the embodiments of the present invention describes the example in which the operation signal is inputted from the swing control lever 81 into the controller 80 for swing control and the swing drive command is outputted from the controller 80 for swing control to the control valve 42. However, the present invention is not limited to this. For example, the swing drive command may be outputted from the swing control lever 81 to the control valve 42 directly not via the controller 80 for swing control, thereby driving the swing hydraulic motor 27.

In the embodiments of the present invention, the construction machine is described taking the hydraulic excavator as an example. However, the invention is not limited to this but can be applied to the whole of construction machines and operating machines having a swing structure other than the hydraulic excavator.

### Explanation of Reference Numerals

- 1: Track structure
- 2: Swing structure
- 21: Swing frame
- 22: Engine
- 23: Assist power generation motor
- 24: Storage device
- 25: Swing electric motor
- 26: Speed reduction mechanism
- 27: Swing hydraulic motor
- 3: Front device
- 31: Boom
- 31: Arm
- 35: Bucket
- 41: Hydraulic pump
- 42: Control valve
- 55: Electric motor control unit
- 60: Controller for electric motor control
- 80: Controller for swing control
- 81: Swing control lever
- 90: Gear housing
- 91: Shaft housing
- 92: Circular barrel
- 93: Inner ring
- 94: Outer ring
- 95: Drive pinion
- 96: Pinion shaft

## Claims

1. A construction machine comprising:
a prime mover (22);
a hydraulic pump (41) driven by the prime mover (22);
a hydraulic motor (27) driven by hydraulic fluid from the hydraulic pump (41);
an electric motor (25);
a storage device (24) for delivering and receiving electric power to and from the electric motor (25);
a controller (60) for electric motor control, the controller exercising drive control on the electric motor (25); and
a speed reduction mechanism (26) for transmitting drive forces of the electric motor (25) and the hydraulic motor (27) to a swing structure (2);
wherein the controller (60) for electric motor control includes
inductive voltage waveform detecting means for detecting an inductive voltage waveform of the electric motor (25); and
magnetic pole position computing means for, in a state where the swing structure (2) is driven only by torque of the hydraulic motor (27), taking in the inductive voltage waveform from the inductive voltage waveform detecting means and computing a magnetic pole position of a rotor of the electric motor (25) on the basis of the inductive voltage waveform obtained not via a rotation position sensor.

2. The construction machine according to claim 1,
wherein when a magnetic pole position of a rotor with respect to a stator in the electric motor (25) is unclear because of low swing speed of the swing structure (2), an swing control lever (81) for swing-controlling the swing structure (2) is operated to output a swing drive command to a control valve (42) adapted to supply hydraulic fluid from the hydraulic pump (41) to the hydraulic motor (27) to drive the swing structure (2).

3. The construction machine according to claim 2,
wherein the controller (60) for electric motor control further includes sensor-less drive control means for, when the electric motor (25) reaches a rotation speed that can be used for computing a magnetic pole position of the rotor, computing a magnetic pole position of the rotor on the basis of the inductive voltage waveform, and controlling drive of the electric motor (25).

4. The construction machine according to claim 3,
wherein the sensor-less drive control means starts to apply torque to the electric motor (25) when the electric motor (25) is increased in speed to reach a set value.

5. The construction machine according to claim 3,
wherein the sensor-less drive control means stops application of torque to the electric motor (25) when the electric motor (25) is reduced in speed to reach a set value.
